# EUROPEAN PATENT SPECIFICATION

(11) **EP 2 199 717 B1**
(45) Date of publication and mention of the grant of the patent: **17.04.2013**
(21) Application number: 08425782.3
(22) Date of filing: 09.12.2008
(51) Int. Cl.: F27B 1/02, F27B 1/14, F27D 1/04, F27D 1/14, C04B 2/12

(54) **Refractory ring for a lime kiln**
Feuerfest-Ring für einen Kalkofen
Anneau refractaire pour un four à chaux

(43) Date of publication of application: 23.06.2010
(73) Proprietor: Cimprogetti S.p.A., 24044 Dalmine (BG) (IT)
(72) Inventor: Locatelli, Luigi Diano, 24044 Dalmine (BG) (IT); Collarini, Oliviero, 24044 Dalmine (BG) (IT)
(74) Representative: Gatti, Enrico

(56) References cited:
- GB-A- 227 684
- SCHULZE-HEIL B: "VERBESSERUNGEN AN DER MAUERWERKSKONSTRUKTION DES GLEICHSTROM-GEGENSTROM-REGENERATIVOFENS//I MPROVEMENTS IN THE REFRACTORY BRICKWORK OF THE PARALLEL-FLOW/COUNTER-FLOW REGENERATIVE KILN//AMELIORATIONS APPORTEES A LA CONSTRUCTION DE LA MACONNERIE D'UN FOUR A" ZKG INTERNATIONAL, BAUVERLAG BV., G]TERSLOH, DE, vol. 37, no. 9, 1 September 1984 (1984-09-01), pages 443-448, XP001202100 ISSN: 0949-0205

## Description

The present invention relates to a refractory ring for a lime kiln, and in particular a parallel flow regenerative kiln, and to the relative construction method.

A regenerative kiln is composed mainly of two upper shafts in which combustion takes place, and two lower shafts in which the product is cooled. In the regenerative kiln the combustion takes place alternately in the two upper shafts continuously.

The limestone is loaded into each shaft and descends along the preheating/regenerative zone in which heat transfer takes place, and arrives in the calcining zone. From there it reaches the cooling zone.

Air is fed into the base of each shaft to cool the lime. The cooling air for the shaft in the combustion state, together with the combustion gases and the carbon dioxide formed by the calcining, flow through the circular interconnection channel between the two side-by-side shafts, with its section obtained by the final corner of the combustion shaft, to pass from one shaft to the other. In this shaft, the gases from the shaft under combustion mix with the cooling air fed into its base and rise to hence heat the mineral in the cooling zone.

Parallel shaft regenerative kilns are known, for example from EP 1 602 889 and B. Schulze-Heil, "Verbesserungen an der Maurwerks-Konstruktion des Gleichstrom-Gegenstrom-Regenerativofens", ZKG-International, Sept. 1984, pages 443-448, comprising a space known as a circular crown to enable the combustion gases to pass from one shaft to the other.

This space is defined by the prolongation of the upper shaft into the lower shaft.

In particular, the outer surface of the lower end of the upper shaft and the inner surface of the upper end of the lower shaft define this space.

This curved prolongation presents shaped refractory elements keyed into each other. During kiln operation, these expand during heating and contract during cooling. As these reactions do not take place uniformly, tensions are created which result in breakage of some elements or form cracks.

An object of the present invention is to provide a parallel flow regenerative kiln which does not suffer from the drawbacks of the known art.

Another object is to simplify the construction of a kiln of this type.

A further object is to make the most outer constituent corner of the final ring of the upper shaft more robust and resistant to high temperatures, and to the mechanical (abrasive) action of the entering material.

These and further objects are attained according to the present invention by a refractory ring for a lime kiln according to claim 1.

These objects are also attained by a method for constructing a refractory ring for a lime kiln according to claim 5.

Further characteristics of the invention are defined in the dependent claims.

For insulating the shell, already formed bricks are installed, so eliminating special fixings and providing simple guide tracks on which to place the bricks provided with appropriate couplings.

As a consequence of the present invention, the installation and drying procedures are simplified.

Internal reinforcements are eliminated, as is the special equipment necessary in the known art, which in any event has to be removed before kiln start-up and is not used again.

By virtue of this refractory brick coupling system, kiln maintenance operations are also facilitated.

The characteristics and advantages of the present invention will be apparent from the ensuing detailed description of one embodiment thereof, illustrated by way of non-limiting example in the accompanying drawings, in which:

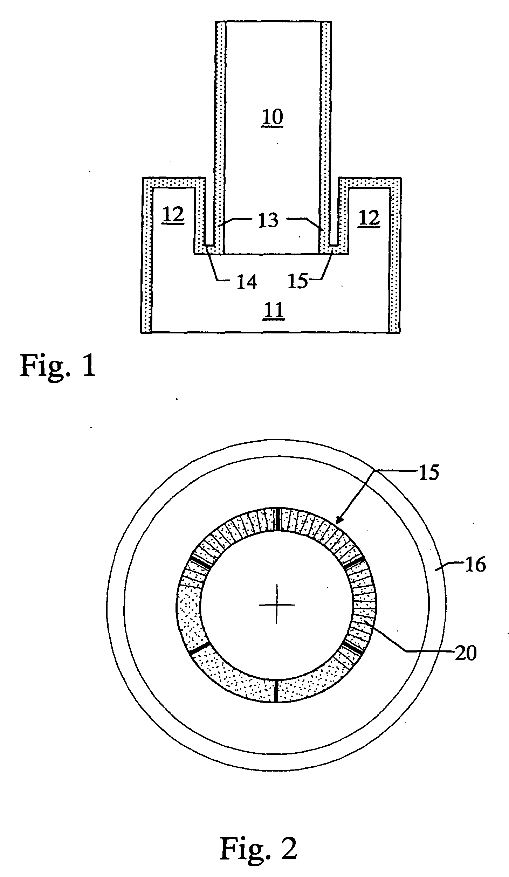

Figure 1 is a schematic view of a lime kiln according to the present invention;
Figure 2 is a schematic top sectional view of a lime kiln according to the present invention;

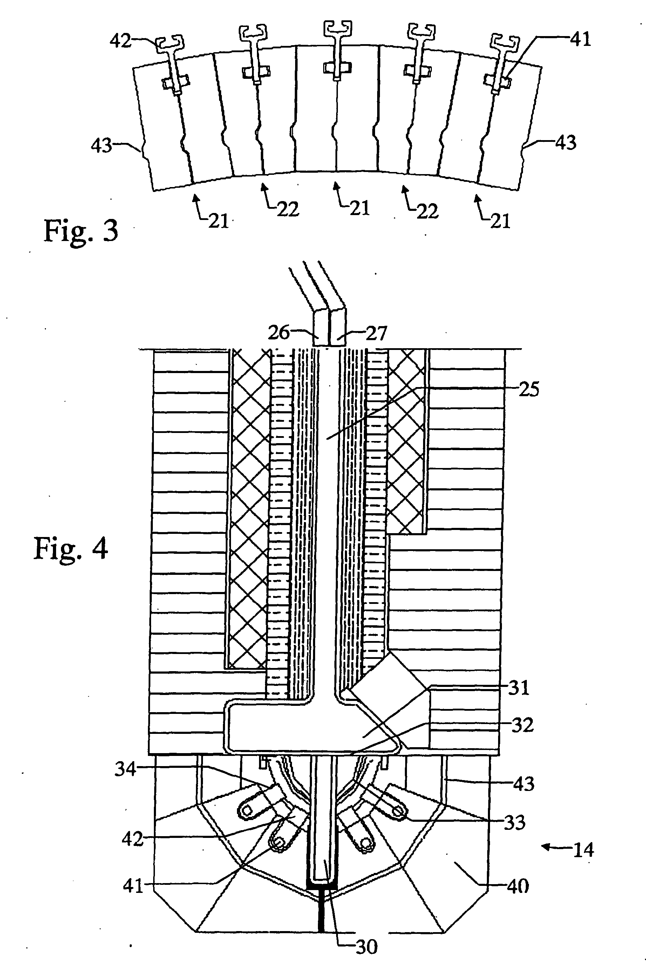

Figure 3 shows schematically a detail of the ring of a lime kiln, according to the present invention;
Figure 4 shows schematically a first embodiment of a ring according to the present invention;

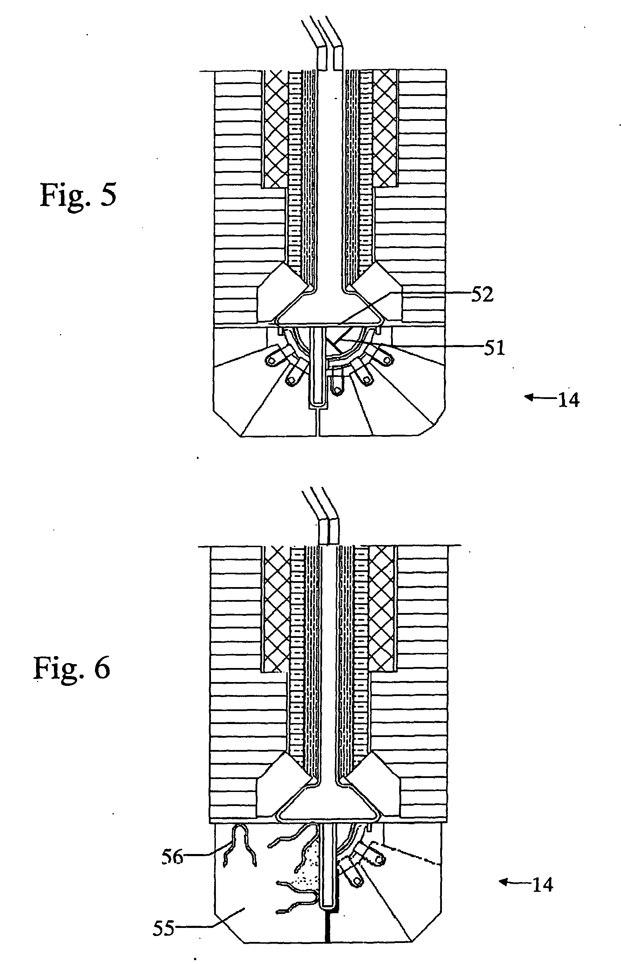

Figure 5 shows schematically a second embodiment of a ring according to the present invention;
Figure 6 shows schematically a third embodiment of a ring according to the present invention.

With reference to the accompanying figures, a lime kiln according to the present invention comprises a first upper shaft 10 connected to a respective first lower shaft 11.

To the side of and connected to these two shafts, in the case of a parallel flow regenerative kiln, the kiln comprises a second upper shaft connected to a respective second lower shaft (not shown).

The gases generated by combustion pass from the first shafts to the second shafts through a circular crown 12 formed within the area lying between the prolongation 13 of the upper shaft 10 into the lower shaft 11, and the inner walls of the lower shaft 11.

During kiln operation, because of the effect of the combustion gases, the ring 14, positioned at the lower end of the prolongation 13, expands outwards to produce a pressure. Part of this pressure is absorbed by the joints provided for the constituent sections of the ring and part is opposed by the corner structure designed for this purpose. In contrast, during kiln cooling, gaps can form because of contraction, and if not cleaned they fill with dust such that on again heating the kiln they oppose correct thermal expansion, with resultant increase in the pressure on the corner structure counteracting the ring and on the refractory elements themselves.

After a number of repetitive heating and cooling processes, the impeded expansion can result in breakage of the refractory elements, with the need to immediately replace the components.

To limit and prevent the aforedescribed problems, a solution has been studied which forms the ring 14 in several sections 20. Each section 20 of the terminal ring 14 is composed of blocks of refractory elements 21 and 22 joined together such that the expansion/contraction joints are limited to the number of constituent sections 20 of the refractory ring.

In one embodiment, the ring 14 is made in six sections 20. The number of sections 20 can vary depending on the diameter of the ring 14.

The ring 14 is made in various sectors 20, each composed in their turn of misshapen blocks (wedges) 22 (in the form of a rectangular or square based truncated pyramid) and of straight blocks 21 (of parallelepiped shape).

On the sides of each constituent brick the blocks 21 and 22 are provided with male and female guide tongues 43, both to facilitate assembly and to counteract any infiltration of exhaust gases behind the wall, with consequent damage to the insulating refractory lining.

The particular shape of the blocks 21 and 22 means that to assemble the entire ring or a part of it, it is not necessary, as in common practice, to make rear openings in the metal backing structure, but instead they can be mounted directly from the inside, and moreover the entire ring or part of it can be demounted and remounted without having to disturb the integrity of the metal corner structure, so ensuring its life.

The blocks 21 and 22 used to form each of the six sections 20 are fixed together by a mortar able to securely "cement" the adjacent bricks together and create each section as a single block, without any expansion joint between them.

The mortar used is for example of the type known as KXXR or AGXR mortar, marketed by the Refratechnik Company.

The expansion joints, of predefined length and filled with mortar as in the known art, are present only between the various sections 20, these hence being the only expansion points.

To form the ring 14, the preferable choice was to use 3+3 blocks positioned in a vertical plane, and virtually superposed. However the number used can be from one to more than one, while always maintaining the same support structure.

The ring 14 comprises a metal (steel) structure, which has the double purpose of withstanding and at the same time counteracting the thermal expansion of the refractory ring. The metal structure is divided in its cross-section by one or more chambers such that these are traversed by an aeriform flow.

The metal structure is fixed to a vertical metal support element 25, tubular, which supports the prolongation 13 with the relative refractory elements, in known manner. The support element 25, in particular its final portion, can assume various forms, some of these being shown in the accompanying figures.

The support element 25 is tubular and is divided into two compartments, to enable the prolongation 13 and the ring 14 to be aerated, via a connection comprising an inlet conduit 26 and outlet conduit 27, by an aeriform flow.

The metal structure comprises a first vertical metal element 30, preferably tubular, fixed to the support element 25, and typically terminating with a horizontal plate 31.

To the right and to the left of the first vertical metal element 30 there are fixed two curved bars 32 having their ends fixed to the first vertical metal element 30 and to the plate 31.

Again to the right and to the left of the first vertical metal element 30 and below the two curved bars 32 a curved metal guide 33 is fixed, having a free end 34. The guide 33 extends within a vertical plane, the free end 34 lying at its upper end. In particular, the guide 33 is in the form of an H-shaped bar positioned with the two parallel arms in a horizontal position and the central rod in a horizontal position.

The guide 33 is fixed between the metal element 30 and the plate 31. The H-shaped bar of the guide 33 lacks one of the two arms of the H (that towards the kiln interior) in the portion forming the end 34 close to the plate 31, for a prefixed minimum length, to leave a space between the free end 34 and the plate 31.

The blocks 40, seen laterally, have a shape (square or rectangular based truncated pyramid, possibly different from each other) which enables the ring 14 to be formed. Each of them comprises, in proximity to their upper end, a support 41 which penetrates only partially into the blocks (specifically into the interior of each pair of side-by-side blocks, which are then cemented together) to which a piece of C-shaped bar 42 is connected external to the blocks, with the aperture of the C facing upwards to behave as a coupling element, to be able to be coupled to the H-shaped guide 33.

The blocks 40 can be connected to the guide 33 by other technical solutions, for example a metal pin with a ring fixed thereto can be used, passing into the block.

The coupling element formed from the C-shaped bar 42 can be slid over the curved guide 33 from its free end 34 where part of the H is missing, and then slid downwards while coupling onto the guide 33. The blocks 40 are inserted one after the other and hence remain fixed.

That block 40 positioned in proximity to the plate 31 does not comprise the coupling systems of the other blocks, it being fixed as a normal wedge and initially maintained in position by the lateral guide tongues 43.

The blocks 40 are previously formed using shaped refractory bricks. The shaped bricks are formed with determined characteristics guaranteed by the manufacturer. For example, the bricks manufactured by the Refratechnik Company or by the most well-known companies of the sector can be used.

With this preferred solution, using shaped bricks, the kiln preheating and start-up can be carried out without the costly and delicate pre-drying of the concrete masses which are known to require well controlled lengthy times and gradients.

According to another embodiment of the ring 14, the blocks 40, which in the preceding case were three per side about the first vertical metal element 30, are now four on one side and three on the other.

On that side on which the blocks 40 are in greater number, towards the interior of the curved bar 32, which in this case acquires a greater volume, a series of metal baffles 51 are positioned to form further chambers for aerating the ring 14.

According to a further embodiment of the ring 14, that ring portion most internal to the kiln, relative to the first vertical metal element 30, and hence most exposed to high temperatures, is constructed as previously described. In the other portion, to the left of the first vertical metal element 30, the ring 14 is in the form of concrete blocks 55. These are cast in situ complete with fixings 56 to be welded to the metal structure (bar 32) so that there is no need for the curved metal guide 33.

The ring is made in several sections checking that the concrete has properly set before casting the adjacent sections.

Each ring section requires for its construction previously prepared forms, the casting fixings being welded to the corner structure in situ. These fixings are of various shapes and lengths.

When each individual portion has been installed, it is supported by the metal structure.

In this case the installation must be carried out by qualified personnel who check the correct preparation of the concrete to ensure a good final result. Moreover, the physico-chemical properties of the raw materials are an important assumption for the proper success of the shaft corner.

The present invention is applicable to a parallel flow regenerative kiln and also to single shaft lime kilns in which there is a change of cross-section.

The materials used and the dimensions can be chosen at will according to requirements and to the state of the art.

## Claims

1. A refractory ring (14) for a lime kiln, said kiln comprising: an upper first shaft (10) and a lower second shaft (11); said upper shaft (10) being connected to said lower shaft (11); said ring (14) corresponding to the lower end of said upper first shaft (10, 11), said ring (14) comprises a plurality of vertically aligned refractory elements (21, 22), each of said plurality of refractory elements (21, 22) comprising a coupling element (41, 42) in proximity to an end thereof, said ring (14) comprising a metal structure (25, 30, 31, 32) including a guide positioned in a vertical plane to cooperate with said coupling element (41, 42); said metal structure (25, 30, 31, 32) is tubular and is connected to an inlet conduit and an outlet conduit for an aeriform flow; **characterized in that** said guide (33) comprises a H-shaped bar and said coupling element comprises a C-shaped bar (42) attached to a support which penetrates partially within said plurality of refractory elements (21, 22, 40); said ring is formed from a plurality of refractory material sections (20); said plurality of sections comprising a plurality of horizontal aligned refractory elements (21, 22, 40) alternately comprising square or rectangular based elements of truncated pyramid shape and elements of parallelepiped shape.

2. A ring as claimed in claim 1, **characterized in that** said plurality of refractory elements (21, 22, 40) comprise refractory bricks and/or refractory cement.

3. A ring as claimed in claim 1, **characterised in that** said prolongation (13) comprises a metal support structure to which said metal structure (30) is fixed.

4. A ring as claimed in claim 1, **characterised in that** said upper shaft (10) comprises a prolongation (13) which extends into the interior of said lower shaft (11); said annular ring (14) being positioned at the lower end of said prolongation (13).

5. A method for constructing a refractory ring (14) for a lime kiln, said ring being positioned at the lower end of an upper shaft (10, 11); and comprising the steps of providing said ring (14) with a metal structure (30) including a guide (33) positioned in a vertical plane; wherein said metal structure (30) is tubular and providing to said metal structure tubular an inlet conduit and an outlet conduit for an aeriform flow; forming a plurality of refractory elements (21, 22, 40) provided with coupling elements (41, 42); connecting said coupling elements (41, 42) to said guide (33); said guide comprises a H-shaped bar (32) and said coupling element comprises a C-shaped bar (42) attached to a support which penetrates partially within said plurality of refractory elements (21, 22, 40); forming said ring (14) of a plurality of refractory material sections (20); said plurality of sections (20) comprising a plurality of horizontal aligned refractory elements (21, 22, 40) alternately comprising square or rectangular based elements of truncated pyramid shape and elements of parallelepiped shape.

6. A lime kiln comprising an annular ring (14) in accordance with claim 1.

## Patentansprüche

1. Feuerfester Ring (14) für einen Kalkofen, wobei der Ofen aufweist: eine obere erste Welle (10) und eine untere zweite Welle (11); wobei die obere Welle (10) mit der unteren Welle (11) verbunden ist; wobei der Ring (14) mit dem unteren Ende der oberen ersten Welle (10, 11) in Beziehung steht; wobei der Ring (14) eine Mehrzahl von vertikal ausgerichteten, feuerfesten Elementen (21, 22) aufweist, wobei jedes der Mehrzahl von feuerfesten Elementen (21, 22) ein Kopplungselement (41, 42) in der Nähe zu einem Ende davon aufweist, wobei der Ring (14) eine Metallstruktur (25, 30, 31, 32) aufweist, die eine in einer vertikalen Ebene angeordnete Führung hat, um mit dem Kopplungselement (41, 42) zusammenzuwirken; wobei die Metallstruktur (25, 30, 31, 32) rohrförmig ist und mit einer Einlassleitung sowie einer Auslassleitung für eine gasförmige Strömung verbunden ist; **dadurch gekennzeichnet, dass** die Führung (33) einen H-förmigen Träger aufweist und das Kopplungselement einen C-förmigen Träger (42) aufweist, die an einer Halterung befestigt sind, die teilweise in die Mehrzahl von feuerfesten Elementen (21, 22, 40) eindringt; wobei der Ring aus einer Mehrzahl von feuerfesten Materialabschnitten (20) gebildet ist; wobei die Mehrzahl von Abschnitten eine Mehrzahl von horizontal ausgerichteten, feuerfesten Elementen (21, 22, 40) umfasst, die abwechselnd quadratische oder rechteckige Basiselemente mit Pyramidenstumpf-Form und Elemente mit Parallelepiped-Form beinhalten.

2. Ring nach Anspruch 1, **dadurch gekennzeichnet, dass** die Mehrzahl von feuerfesten Elementen (21, 22, 40) feuerfeste Steine und/oder feuerfesten Zement aufweisen.

3. Ring nach Anspruch 1, **dadurch gekennzeichnet, dass** die Verlängerung (13) ein Metallhaltestruktur aufweist an der die Metallstruktur (30) befestigt ist.

4. Ring nach Anspruch 1, **dadurch gekennzeichnet, dass** die obere Welle (10) eine Verlängerung (13) hat, die sich in das Innere der unteren Welle (11) erstreckt; wobei der ringförmige Ring (14) am unteren Ende der Verlängerung (13) angeordnet ist.

5. Verfahren zum Konstruieren eines feuerfesten Rings (14) für einen Kalkofen, wobei der Ring am unteren Ende einer oberen Welle (10, 11) angeordnet ist; und mit den Schritten: Versehen des Rings (14) mit einer Metallstruktur (30), die eine Führung (33) hat, die in einer vertikalen Ebene angeordnet ist; wobei die Metallstruktur (30) rohrförmig ist und die rohrförmige Metallstruktur mit einer Einlassleitung sowie einer Auslassleitung für eine gasförmige Strömung versieht; Ausbilden einer Mehrzahl von feuerfesten Elementen (21, 22, 40), die mit Kopplungselementen (41, 42) versehen sind; Anbringen der Kopplungselemente (41, 42) an der Führung (33); wobei die Führung einen H-förmigen Träger (32) aufweist und das Kopplungselement einen C-förmigen Träger (42) aufweist, die an einer Halterung befestigt sind, die teilweise in die Mehrzahl von feuerfesten Elementen (21, 22, 40) eindringt; Ausbilden des Rings (14) aus einer Mehrzahl von feuerfesten Materialabschnitten (20); wobei die Mehrzahl von Abschnitten (20) eine Mehrzahl von horizontal ausgerichteten, feuerfesten Elementen (21, 22, 40) umfasst, die abwechselnd quadratische oder rechteckige Basiselemente mit Pyramidenstumpf-Form und Elemente mit Parallelepiped-Form beinhalten.

6. Kalkofen mit einem ringförmigen Ring (14) nach Anspruch 1.

## Revendications

1. Anneau réfractaire (14) pour un four à chaux, ledit four comprenant : un premier arbre supérieur (10) et un second arbre inférieur (11) ; ledit arbre supérieur (10) étant raccordé audit arbre inférieur (11) ; ledit anneau (14) correspondant à l'extrémité inférieure dudit premier arbre supérieur (10, 11), ledit anneau (14) comprend une pluralité d'éléments réfractaires alignés verticalement (21, 22), chaque élément de ladite pluralité d'éléments réfractaires (21, 22) comprenant un élément de couplage (41, 42) à proximité d'une de ses extrémités, ledit anneau (14) comprenant une structure métallique (25, 30, 31, 32) comprenant un guide positionné dans un plan vertical pour coopérer avec ledit élément de couplage (41, 42) ; ladite structure métallique (25, 30, 31, 32) est tubulaire et est raccordée à un conduit d'entrée et à un conduit de sortie pour un écoulement aériforme, **caractérisé en ce que** ledit guide (33) comprend une barre en forme de H et ledit élément de couplage comprend une barre en forme de C (42) fixée à un support qui pénètre partiellement à l'intérieur de ladite pluralité d'éléments réfractaires (21. 22. 40) ; ledit anneau est formé à partir d'une pluralité de sections de matériau réfractaire (20) ; ladite pluralité de sections comprenant une pluralité d'éléments réfractaires (21, 22. 40) alignés horizontalement comprenant en alternance des éléments à base carrée ou rectangulaire en forme de pyramide tronquée et des éléments de forme parallélépipédique.

2. Anneau selon la revendication 1, **caractérisé en ce que** ladite pluralité d'éléments réfractaires (21, 22, 40) comprend des briques réfractaires et/ou du ciment réfractaire.

3. Anneau selon la revendication 1, **caractérisé en ce que** ledit prolongement (13) comprend une structure de support métallique à laquelle ladite structure métallique (30) est fixée.

4. Anneau selon la revendication 1, **caractérisé en ce que** ledit arbre supérieur (10) comprend un prolongement (13) qui s'étend à l'intérieur dudit arbre inférieur (11) ; ledit anneau annulaire (14) étant positionné au niveau de l'extrémité inférieure dudit prolongement (13).

5. Procédé de construction d'un anneau réfractaire (14) pour un four à chaux, ledit anneau étant positionné au niveau de l'extrémité intérieure d'un arbre supérieur (10, 11); et comprenant les étapes consistant à doter ledit anneau (14) d'une structure métallique (30) comprenant un guide (33) positionné dans un plan vertical ; dans lequel ladite structure métallique (30) est tubulaire ; et doter ladite structure métallique tubulaire d'un conduit d'entrée et d'un conduit de sortie pour un écoulement aériforme ; former une pluralité d'éléments réfractaires (21, 22, 40) dotés d'éléments de couplage (41, 42) ; raccorder lesdits éléments de couplage (41, 42) audit guide (33) ; ledit guide comprenant une barre en forme de H (32) et ledit élément de couplage comprenant une barre en forme de C (42) arrimée à un support qui pénètre partiellement à l'intérieur de ladite pluralité d'éléments réfractaires (21, 22, 40) ; former ledit anneau (14) d'une pluralité de sections de matériau réfractaire (20) ; ladite pluralité de sections (20) comprenant une pluralité d'éléments réfractaires (21, 22, 40) alignés horizontalement comprenant en alternance des éléments à base carrée ou rectangulaire en forme de pyramide tronquée et des éléments de forme parallélépipédique.

6. Four à chaux comprenant un anneau annulaire (14) en conformité avec la revendication 1.
